# EUROPEAN PATENT APPLICATION

(11) **EP 1 153 731 A2**
(43) Date of publication of application: **14.11.2001**
(21) Application number: 01110147.4
(22) Date of filing: 04.05.2001
(51) Int. Cl.: B29C 70/60, B29C 45/34, B29C 45/56

(54) **Thermosetting composite material, particularly suitable for manufacturing sanitary ware and kitchen sinks, and associated method for manufacturing them**

(30) Priority: 08.05.2000 IT MI001001
(71) Applicant: Elleci S.p.A., 04014 Pontinia (Prov. of Latina) (IT)
(72) Inventor: Traversa, Giancarlo, 04019 Terracina (Latina) (IT); Traversa, Giorgio Davide, 04019 Terracina (Latina) (IT); Zannella, Silvia, 04022 Fondi (Latina) (IT)
(74) Representative: Modiano, Guido, Dr.-Ing.

(57) **Abstract**

A thermosetting composite material, comprising a polymeric matrix and a filler adapted to be distributed in the polymeric matrix, the filler comprising a mixture of two portions of crystalline quartz particles, in which one of the portions has particles with higher granulometry than the other one, the filler being distributed uniformly within the polymeric matrix. The mold used for molding by using the composite material. The method for manufacturing molded articles by means of the mold.

## Description

The present invention relates to a thermosetting composite material, particularly suitable for manufacturing sanitary ware and kitchen sinks, and to a method for manufacturing said sinks. More particularly, the invention relates to a thermosetting composite material suitable for manufacturing fitted sinks and to the particular configuration of the molds used to manufacture sinks using such thermosetting material.

It is known, for example from EP-361101, that modern fitted sinks can be manufactured by using plastics and more particularly by means of a mass which contains a resin which constitutes the matrix and a filler which is formed at least predominantly of mineral particles. The filler constitutes approximately 50 to 85% by weight of the mass and the mineral particles of the material have an unbroken grain shape. They have a colored coating on their surface and the predominant portion of the mineral filler particles have a size of approximately 0.1 to 2 mm.

The fitted sink is formed by a visible front side or user side, and by a rear side: in the regions of the fitted sink that are subject to severe wear and tear during use, i.e., at its front side, the packing density of said mineral filler particles is greater than at the rear side of the fitted sink, which is subject to less severe wear and tear during use.

However, the more wear-resistant working surface (front side) that can be obtained with the material having the above described characteristics does not have a high impact strength, and this drawback becomes apparent already during the transport of the fitted sinks.

Moreover, the settling and natural shrinkage of the resin, which are consequences of polymerization, form a working surface which is characterized by small depressions in which dirt can easily accumulate.

The use of mineral filler particles having an excessive diameter in fact entails the fact that said particles, by settling at a higher rate, find place on the working surface, thus causing the disadvantage of deep depressions in which scale and fatty substances (the fundamental constituents of dirt) can accumulate easily. The foundations are laid, therefore, for the aesthetic and functional deterioration of the article. Scale in fact alters the original coloring (especially for dark shades) and acts as a substrate for the deposition of organic material, accordingly creating a microenvironment which is suitable for bacterial proliferation.

Moreover, the above cited European patent discloses a molding method in which the mold used for the injection of the plastic material has to be turned in order to bring it into the filling position, and for this purpose it is necessary to provide a certain number of mechanical moving parts.

This clearly leads to constructive complication and to a high cost of the equipment.

Additionally, the entire structure, owing to the oscillating motion, is subjected to considerable stresses which can compromise its stability.

The rotation of the mold, obtained by means of pneumatic cylinders, moves the mold into a position of unstable equilibrium. The accidental failure of the pneumatic cylinders that allow to turn the mold and keep it in the filling position can cause a violent return of the mold to the horizontal position. Accordingly, it is necessary to provide a plurality of preventive measures in order to ensure the physical safety of the operators.

The devices required for rotation are weak points also from the functional standpoint of the machine. If these devices fail, the repair times can in fact entail delays in returning the unit to the production cycle.

The aim of the present invention is to provide a thermosetting composite material which is particularly suitable for manufacturing fitted sinks and has characteristics that are as uniform as possible.

Within this aim, an object of the present invention is to provide a thermosetting composite material which is compact and flexible, with higher impact strength than conventional thermosetting composite materials.

Another object of the present invention is to provide a thermosetting composite material which allows to manufacture a fitted sink with a working surface that is more resistant to wear and substantially free from significant depressions in which dirt can accumulate easily.

Another object of the present invention is to provide a thermosetting composite material, particularly suitable for manufacturing fitted sinks, in which the settling rate is controlled accurately.

Another object of the present invention is to provide a thermosetting composite material in which the packing density of filler particles is substantially uniform throughout the material.

Another object of the present invention is to provide a method for manufacturing fitted sinks by means of said thermosetting composite material in which the molds that are used do not require to be turned into a filling position different from the horizontal one in order to use them.

Another object of the present invention is to provide a method for manufacturing fitted sinks which uses a mold whose configuration is particularly adapted to prevent the injected material from forming turbulent flows with inclusion of air or separation of the components of the injection-molding mix.

Another object of the present invention is to provide a method for manufacturing, by molding, fitted sinks in which it is possible to use different molds on a limited number of machines, with considerable flexibility of production activity.

Another object of the present invention is to provide a thermosetting composite material which is highly reliable, relatively simple to manufacture and at competitive costs.

This aim and these and other objects which will become better apparent hereinafter are achieved by a thermosetting composite material, comprising a polymeric matrix and a filler adapted to be distributed in said polymeric matrix, characterized in that said filler comprises a mixture of two portions of crystalline quartz particles, in which one of said portions has a larger granulometry than the other one, said filler being distributed uniformly within said polymeric matrix.

The aim and the objects are also achieved by a method for manufacturing articles molded by means of a mold according to one or more of claims 18 to 20 and with a material according to one or more of claims 1 to 13, characterized in that it comprises the steps of keeping the mold in a horizontal and fixed position and injecting said material into the distribution channel in order to fill the cavity of the mold.

Further characteristics and advantages of the invention will become better apparent from the following detailed description of preferred but not exclusive embodiments of the thermosetting composite material according to the invention.

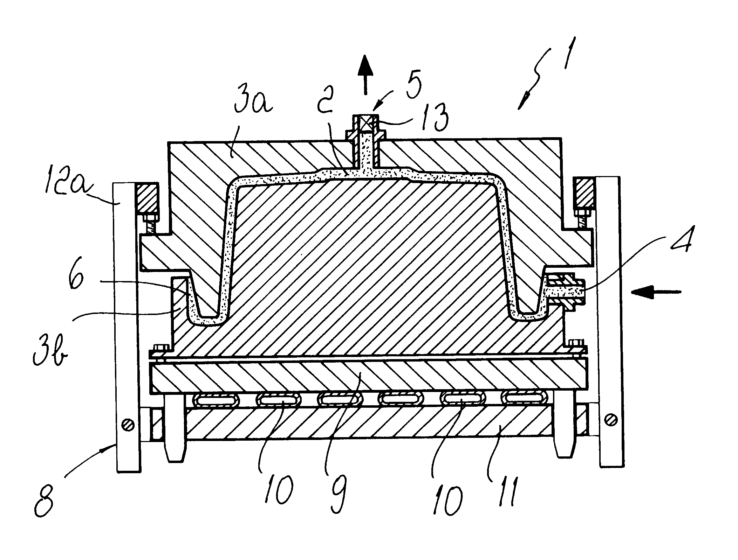

The mold used for molding by using said composite material is shown in the accompanying drawing, in which the only figure is a sectional view thereof.

The composite material according to the invention comprises a polymeric matrix constituted by a resin and a filler which is adapted to be uniformly distributed in the polymeric matrix.

The filler is at least predominantly formed by mineral particles.

The mineral particles of the filler, conveniently constituted by crystalline quartz conveniently coated with silicate and preferably containing inorganic pigments (diameter between 0.1 and 0.8 mm) are mixed with particles of natural quartz having a smaller size distribution (diameter between 0.05 and 0.2 mm).

The crystalline quartz particles used in the invention are advantageously subjected to a silanization process (a treatment which coats the particles with organofunctional silanes). Organosilanes facilitate adhesion between the organic matrix and the inorganic filler, generally improving the mechanical characteristics of a composite material and particularly its toughness, i.e., its ability to withstand impacts and instantaneous stresses.

The organosilanes that can be introduced in the quartz particle mix are mercaptosilanes. They consist of chain transfer agents used in the rubber vulcanization process. In particular, 3-trimethoxysilylpropane-1-thiol attacks the polymeric chains, terminating them with groups which bind covalently with the inorganic filer and, being a chain transfer agent, allows to reduce the molecular weight of the polymer. Accordingly, it is possible to obtain a polymeric matrix which is more elastic and therefore less sensitive to impacts.

The use of a relatively low percentage of natural crystalline quartz having a finer particle size distribution (specific surface 160 cm²/g) allows to increase considerably the silanized surface at which adhesion between the polymer and the inorganic filler occurs (for example 10% of the total weight of the filler allows to increase the contact surface by an average of 20%).

Moreover, natural quartz not coated with silicates containing disperse inorganic pigments is silanized more effectively.

The finer quartz particles can thus occupy the empty spaces formed between the larger quartz particles, and this entails on the one hand an increase in compactness in the mass of the material and on the other hand the formation of shallower small depressions (with respect to the ones formed in the working surface of fitted sinks manufactured according to conventional technologies).

During the polymerization step, the resin contracts, leaving exposed the quartz particles and forming small depressions whose size in any case does not allow the deposition of scale and fatty substances, which are the fundamental constituents of dirt.

The filler used in the present invention therefore allows to increase the surface of contact between the quartz particles and the resin, enhance the adhesion between the two components, and ultimately increase the compactness of the final material.

The portion of filler particles having a diameter of less than 0.1 mm has been increased: fillers with a diameter between 0.1 and 0.4 mm are in fact present in a concentration between 60 and 65% by weight of filler, and advantageously the portion of colorless natural quartz particles with a diameter between 0.05 and 0.2 mm is present in a concentration which is preferably comprised between 10 and 30% of the total weight of the filler.

It has also been found that the presence of wollastonite (CaSiO₃) in the filler improves the mechanical performance of the material according to the invention. This mineral, which is characterized by a needle-like structure, gives high resistance to traction and flexure and also improves the thermal properties of the material. Moreover, wollastonite also can be coated with organofunctional silanes.

The particle size distribution that is used allows to obtain a textured surface structure in which visible scratches do not form by abrasion and there are no deep concavities in which dirt can accumulate easily.

The addition of the portion of filler formed by quartz particles having a smaller granulometry (diameter between 0.05 and 0.2 mm) reduces the discontinuity of the transition surface between the polymeric matrix (resin) and the particles of the filler. The thin film of resin that coats the surface of the grains prevents the infiltration of water and the formation of stains.

The higher uniformity of the composite material allows to achieve a high concentration of fillers in the entire mass of the material (preferably between 70 and 80% of total weight), although the resin/filler ratio proximate to the surface region is higher than the typical ratio of a material in which settling of the filler has been facilitated.

This last aspect, together with the presence of the natural (colorless) crystalline quartz mix, entails the need to introduce in the mix coloring pastes which give an appropriate coloring to the polymeric matrix and are added at concentrations between 1 and 5% by weight, according to the color.

Moreover, in order to control the settling of the filler, superdispersed amorphous pyrogenic silica and a double system of peroxide catalysts are used.

The pyrogenic silica that is used is characterized by a high surface area (approximately 200 m²/g) and has, on its surface, silanol groups which, by forming H bonds between adjacent silica aggregates, form a three-dimensional lattice inside the dispersant fluid.

The rheological characteristics of the medium are modified deeply, and the observed effects are: increase in packing density, thixotropy, and control of filler settling.

The increase in the viscosity of the material, caused by the formation of H bonds, reduces the settling rate.

The use of the double catalyst system allows to obtain both good workability of the mix and optimum control over the polymerization rate in relation to the settling of the filler.

The beginning of polymerization, by causing a considerable increase in viscosity, blocks the settling of the filler. The two cyclized radical initiators are characterized by different critical activation temperatures. The former triggers the polymerization reaction and, as a consequence of the generation of heat arising from the fact that the reaction is exothermic, causes the activation of the latter.

The evolution of the temperature of the material, measured during the polymerization process by means of thermocouples, has allowed to define the optimum concentration of two catalysts and the thermal cycle to be set in the molds in order to achieve triggering of polymerization and blocking of filler settling within a few minutes of the injection.

In particular, during the injection of the material, the temperature of the mold part that is in contact with the visible side of the article is kept at 65°C or less, so as to control the settling of the filler and avoid the formation of small bubbles and/or streaks due to early triggering of polymerization and to the consequent uneven distribution of the material in the mold cavity.

The article molded by means of the above-described composite material clearly shows how the filler particles are distributed substantially uniformly in the mass of the material.

The mineral filler particles are advantageously coated with organofunctional silanes which form a covalent bond with the mineral filler and copolymerize with the monomer that is present in the resin. It has been verified that it is possible to silanize the mineral fillers by means of mercaptosilanes, which form a covalent bond with the mineral filler but act as chain transfer agents in the polymerization process. The mercaptosilanes reduce the molecular weight of the polymer and allow to obtain a polymeric matrix which is more elastic and therefore less sensitive to impacts. In particular, excellent results are obtained by using 3-trimethoxysilylpropane-1-thiol.

The invention further relates to a molding method, particularly for obtaining articles made of the above-described thermosetting composite material.

With reference to the figure, the article manufacturing method uses a molding system in which the material is injected while keeping a mold 1 in a horizontal position, even for shapes having a very complex geometry.

This entails several advantages. First of all, the design and manufacture of the structure in which the mold is inserted are simplified considerably, since it is no longer necessary to provide means for rotating the mold and moving it into the filling position.

The lack of mechanical rotation elements entails the advantage of limiting the cost of the equipment and of simplifying the molding operation and reducing its process times.

In order to completely fill the mold, preventing air from remaining trapped inside the mold cavity, the following elements have been provided in the design of the mold parts 3a and 3b: a cavity 2, which corresponds to the shape of the sink (basin and draining board), at least one injection channel 4, at least one venting duct 5 provided with a valve 13 for adjusting the pressure inside the mold, and at least one distribution channel 6.

The material injected through the appropriately provided injection channel 4, arranged on the side of the lower mold part 3b, before filling the cavity is forced to flow through the distribution channel 6, which is arranged around the entire perimeter of said cavity.

The very narrow cross-section of said channel prevents the material from flowing so as to generate turbulent flows characterized by vortices, which can cause the inclusion of air or can separate the components of the mix.

While being distributed uniformly along the perimeter, the material is gradually forced to penetrate the cavity 2 of the mold, while the air exits through the venting duct 5 which is provided at the bottom of the basin and which, in the filling position, is in the uppermost point of the cavity of the mold.

The venting duct 5 has a valve 13 which regulates the discharge of the air. The presence of the valve allows to create, inside the cavity, a cushion of air which slows the advancement of the material and causes it to distribute uniformly in the entire cavity. The value of the pressure inside the mold is kept at approximately 1 bar. To prevent the infiltration of the material inside the valve, the lower part of said valve can be closed with a suitable non-woven fabric, which allows air to pass but is not crossed by the fluid mix. The non-woven fabric is replaced when necessary.

The addition of the superdispersed pyrogenic silica, as explained earlier, is important because it acts as a settling prevention agent and as a thickening agent. The first property helps to hinder the separation of the components of the mix and the second one is instead correlated to the type of motion.

The high viscosity and controlled pressure prevent the mix from flowing freely within the cavity of the mold, and the advancement of the material occurs so that all the spaces and cavities that are present on the surfaces of the mold parts 3a and 3b can be filled uniformly and the air can be eliminated fully.

This allows to mold kitchen sinks with molds that do not require turning of the mold for injection.

The above-described method is further characterized by the fact that the mold part 3b that is in contact with the visible surface of the article (internal surface of the basin of the sink) is kept at less than 65 °C during the introduction of the fluid mix within the cavity of the mold, and is heated to a temperature between 80 and 105 °C only when the cavity has been filled completely.

Moreover, another characteristic of the molding method according to the invention entails the design of a structure in which two quite distinct and independent elements can be noted: the molds 1, and a mold servicing structure 8 which adjusts its production movements.

The servicing structure 8 is constituted by a fixed surface 11 which is laterally provided with mold locking arms 12. A plurality of air cushions for compression are arranged, in contact, between the fixed surface 11 and a movable supporting surface 9 on which the replaceable mold 1 is fixed, said surface being fixed to the mold. The movable surface 9 is provided with guiding pins which are adapted to engage in corresponding seats formed in the fixed surface 11.

This characteristic allows to interchange, on the same structure, molds having different dimensions and geometric shapes, and to require very short times for these operations. The possibility to use different molds on a limited number of machines allows considerable flexibility of production work and a reduction in plant manufacturing costs.

In practice it has been observed that the thermosetting composite material according to the invention fully achieves the intended aim and objects, since it allows to obtain a manufactured article with a more uniform distribution of the filler particles, with an advantage in the intimate contact between the polymeric matrix and the filler particles.

Moreover, the high adhesion between the polymeric matrix and the filler particles gives the material compactness and flexibility, increasing its impact strength.

The mold used to inject the above-described material has the particularity that it does not require a rotation in order to be moved into the injection position, with consequent advantages in terms of structure and costs.

The thermosetting composite material thus conceived is susceptible of numerous modifications and variations, all of which are within the scope of the inventive concept.

Thus, for example, it is possible to use new types of organosilanes and new types of filler in a mix with the above-described filler.

The disclosures in Italian Patent Application No. MI2000A001001 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A thermosetting composite material, comprising a polymeric matrix and a filler adapted to be distributed in said polymeric matrix, **characterized in that** said filler comprises a mixture of two portions of crystalline quartz particles, in which one of said portions has particles with higher granulometry than the other one, said filler being distributed uniformly within said polymeric matrix.

2. The material according to claim 1, **characterized in that** the portion of particles having a higher granulometry has an average particle diameter between 0.1 and 0.8 mm and the portion having a lower granulometry has an average particle diameter between 0.05 and 0.2 mm.

3. The material according to claim 1, **characterized in that** said quartz particles having a larger granulometry are silica particles coated with silicate which contains inorganic pigments.

4. The material according to claim 1, **characterized in that** said crystalline quartz particles are silica particles coated with organofunctional silanes.

5. The material according to claim 1, **characterized in that** said filler comprises a percentage by weight between 60 and 65% of particles having a diameter between 0.1 and 0.8 mm.

6. The material according to claim 1, **characterized in that** said particles having a smaller granulometry are present in an amount between 10 and 30% of the total weight of said filler.

7. The material according to claim 1, **characterized in that** said filler further comprises wollastonite.

8. The material according to one or more of the preceding claims, **characterized in that** said silica particles are coated with mercaptosilanes.

9. The material according to claim 8, **characterized in that** said mercaptosilanes are 3-trimethyoxysilylpropane-1-thiol.

10. The material according to one or more of the preceding claims, **characterized in that** it further comprises superdispersed amorphous pyrogenic silica in a concentration between 0.01 and 1%, and a double system of peroxide catalysts, for controlling the settling of said filler.

11. The material according to claim 10, **characterized in that** said double system of peroxide catalysts comprises two radical initiators having a different critical activation temperature.

12. The material according to claim 1, **characterized in that** said filler is present in a concentration of 70-80% of the total weight of said composite material.

13. The material according to claim 1, **characterized in that** said polymeric matrix comprises a resin.

14. A manufactured article having a high-level characteristic of resistance to mechanical stresses and abrasions, **characterized in that** it is made of a thermosetting composite material according to one or more of the preceding claims.

15. The manufactured article according to claim 14, **characterized in that** it is a molded article.

16. The manufactured article according to claim 15, **characterized in that** said molded article is a sink.

17. Use of a material according to one or more of claims 1 to 13 for producing manufactured articles having high-level characteristics of resistance to mechanical stresses and abrasions.

18. A mold for the injection-molding of articles starting from a fluid mix, comprising two mold parts which are adapted to mate in order to form a molding cavity into which said fluid mix is injected, at least one injection channel and at least one venting duct, **characterized in that** it comprises a valve which adjusts the discharge of air from said venting duct and at least one distribution channel which is arranged along the perimeter of the cavity of said mold and is adjacent to said cavity, for introducing said fluid mix by compression.

19. A molding system, **characterized in that** it comprises a service structure which is constituted by a fixed surface which is laterally provided with arms for locking a mold, by a movable surface which is adapted to support said mold and is provided with guiding pins which engage corresponding seats formed in said fixed surface, at least one bearing or cushion being interposed between said fixed surface and said movable surface.

20. The molding system according to claim 19, **characterized in that** said at least one venting duct is arranged at the top of said upper mold part.

21. The method for manufacturing molded articles by means of a mold according to claim 18 and with a material according to one or more of claims 1 to 13, **characterized in that** it comprises the steps of keeping the mold in a horizontal position and fixed, and injecting said material in the distribution channel in order to fill the cavity of the mold.

22. The method according to claim 21, **characterized in that** it comprises the step of keeping the part of the mold that corresponds to a visible region of the article to be molded at a temperature of less than 65 °C during the injection of a fluid mix and heating said mold part to a temperature between 80 and 105 °C only at the end of the complete filling of the cavity of the mold.
